## Europäisches Patentamt
## European Patent Office
## Office européen des brevets

(19)

(11) Numéro de publication: **0 134 168**
**B1**

(12) # FASCICULE DE BREVET EUROPÉEN

(45) Date de publication du fascicule du brevet:
21.09.88

(51) Int. Cl.⁴: **H 05 H 1/42**, B 01 F 3/06

(21) Numéro de dépôt: **84401450.6**

(22) Date de dépôt: **09.07.84**

(54) Procédé et dispositif pour obtenir un jet homogène à partir d'un jet de plasma et d'un courant de matière finement divisée et appareil utilisant ce procédé.

(30) Priorité: **08.08.83 FR 8313039**

(43) Date de publication de la demande:
**13.03.85 Bulletin 85/11**

(45) Mention de la délivrance du brevet:
**21.09.88 Bulletin 88/38**

(84) Etats contractants désignés:
**AT BE CH DE GB IT LI NL SE**

(56) Documents cité:
**DE-C-856 712**
**FR-A-1 304 737**
**FR-A-2 408 392**
**FR-A-2 514 223**
**GB-A-978 934**
**US-A-3 376 023**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Serrano, Jean-Pierre, 19, Hameau de Villepreux, F-33160 St. Aubin-De-Medoc (FR)**
Inventeur: **Feuillerat, Jean, 19, rue du Lavoir, F-33000 Bordeaux (FR)**

(74) Mandataire: **Bonnetat, Christian, Cabinet PROPI Conseils 23 rue de Léningrad, F-75008 Paris (FR)**

EP 0 134 168 B1

## Description

La présente invention concerne un procédé et un dispositif pour obtenir un jet homogène à partir d'un jet de plasma, ou écoulement gazeux chaud analogue, et d'un courant de matière finement divisée. Elle concerne également un appareil permettant de mettre en oeuvre ce procédé et d'effectuer toutes sortes d'opérations et de réactions au moyen d'un écoulement gazeux chaud.

On sait que s'est développée, ces dernières années, une technique de réactions chimiques et d'opérations diverses (fusion, recristallisation, pyrolyse, etc...), parfois appelée globalement chimie en plasma, mettant en oeuvre des matières finement divisées, telles que poudres et liquides, et un jet de plasma. Selon cette technique, on injecte de telles matières finement divisées, généralement appelées réactifs, dans l'écoulement chaud constitué par le jet de plasma.

Il est particulièrement important, pour la qualité des résultats obtenus, que l'injection des réactifs permette une répartition homogène et une dissolution parfaite de ceux-ci dans ledit écoulement. Or, on sait qu'un jet de plasma présente une viscosité élevée, de sorte que l'injection des réactifs est un problème délicat à résoudre. Il en est particulièrement ainsi lorsqu'il s'agit de faire pénétrer des gouttelettes de liquide ou des particules (dont la taille varie de quelques microns à 1000 microns) dans un jet de plasma dont la température et la pression sont respectivement de l'ordre de 2000°C à 6000°C et de 1 à 20 bars.

On a déjà proposé différentes méthodes pour l'injection de réactifs dans un jet de plasma; ces méthodes font intervenir l'injection des réactifs, soit en amont ou au niveau du générateur de plasma, soit en aval de celui-ci.

Dans le premier cas, on évite un certain nombre de difficultés, et notamment celle du mélange de réactifs froids et du jet de plasma chaud due à la viscosité importante de celui-ci. En revanche, puisque les réactifs doivent traverser le générateur de plasma, cette méthode ne peut être mise en oeuvre avec des réactifs qui risquent de réagir soit avec les électrodes, soit avec les parois du générateur. De plus, elle ne peut être utilisée qu'avec les générateurs de plasma dont la structure se prête à une telle injection.

Dans le cas d'une injection en aval du générateur, on opère de différentes manières. On peut réaliser un lit fluidisé, dans lequel des particules de réactifs se trouvent en suspension dans des réservoirs annexes et entraîner ces particules vers l'écoulement chaud. On se heurte alors aux difficultés mentionnées ci-dessus, dues à la viscosité de ce dernier. On peut également faire tomber les particules par gravité dans l'écoulement chaud. Cependant, là encore, on se heurte au fait que le réactif se mélange peu à l'écoulement chaud, une partie importante des particules des réactifs ayant tendance à rebondir sur celui-ci.

La présente invention a pour objet de remédier à ces inconvénients et de permettre la parfaite homogénéité et dissolution des réactifs dans un écoulement gazeux chaud.

A cette fin, le procédé selon l'invention pour obtenir un jet homogène à partir d'un jet de plasma et d'un courant de matière finement divisée, ladite matière finement divisée étant injectée dans ledit plasma et ledit jet homogène résultant de la combinaison, de l'interaction et/ou de la réaction dudit plasma et de ladite matière finement divisée, comprend les étapes suivantes:
- on interpose sur le trajet dudit jet de plasma un écran percé d'une pluralité d'orifices spatialement répartis autour d'un axe dudit jet de plasma, de façon à fractionner celui-ci en une pluralité d'écoulements élémentaires de plasma présentant au moins approximativement la même direction générale; et
- on amène ledit courant de matière finement divisée à au moins une buse au moins partiellement entourée par lesdits orifices, afin de créer au moins un courant de matière finement divisée, de direction au moins approximativement semblable à celle desdits écoulements élémentaires et entouré par au moins certains de ceux-ci.

On réalise ainsi une injection au moins approximativement coaxiale du courant de matière finement divisée dans le jet de plasma, de sorte que l'on optimise les conditions de transfert entre le jet de plasma chaud et le réactif et que l'on favorise l'homogénéisation du mélange, tout en permettant l'entraînement, et donc la réaction, de toutes les particules de réactif par le jet de plasma.

Afin d'améliorer encore ces conditions de transfert et l'homogénéisation du mélange, il est avantageux que ledit courant de matière finement divisée soit fractionné également en une pluralité de courants élémentaires, adressés à une pluralité de buses respectives, chacune desdites buses étant au moins partiellement entourée par certains desdits orifices de passage des écoulements élémentaires de plasma.

Un tel fractionnement du courant de matière finement divisée peut être réalisé en amont dudit écran ou au niveau de celui-ci.

Par ailleurs, afin de permettre l'injection de plusieurs réactifs dans le même jet de plasma, on peut prévoir plusieurs buses destinées à recevoir des courants de matières finement divisées différentes, chacune desdites buses étant au moins partiellement entourée par certains desdits orifices de passage des écoulements élémentaires de plasma.

Suivant les réactions ou opérations à effectuer, le ou les courants de matière(s) finement divisée(s) peuvent être injectés, dans les écoulements élémentaires de plasma dans le même sens ou à contre-sens de ceux-ci.

Pour permettre la mise en oeuvre aisée de ce procédé, on prévoit, selon l'invention, un écran en forme de plaque épaisse, destinée à être interposée sur le trajet dudit jet de plasma, transversalement à celui-ci, et pourvue de trous traversants formant lesdits orifices de fractionnement dudit jet de plasma et d'au moins une buse entourée au moins partiellement par lesdits orifices, les axes desdits orifices et de la ou des buses présentant au moins la même direction générale et un canal d'alimentation de chaque buse en matière finement divisée étant pratiqué dans l'épaisseur dudit écran et débouchant, individuellement ou en commun avec d'autres canaux, à la périphérie dudit écran pour pouvoir être relié à des moyens d'alimentation en matière finement divisée.

Ledit écran peut être réalisé par l'assemblage de plusieurs plaques. Avantageusement, afin d'éviter les interfaces de mauvaise transmission de la chaleur, il est préférable que ledit écran soit constitué d'une plaque épaisse unique.

L'écran selon l'invention peut être réalisé en une matière réfractaire, par exemple du type céramique. Il en est particulièrement ainsi lorsque la température du jet de plasma ne dépasse pas 2000°C environ. Dans ce cas, il n'est pas nécessaire de prévoir de système de refroidissement, de sorte que la totalité de l'écran est disponible pour agencer librement les orifices et les buses. En revanche, dans le cas où la température du jet de plasma est de l'ordre de 3000°C, ou plus, il est nécessaire d'utiliser un écran refroidi, constitué par du cuivre ou tout autre matière. On doit alors prévoir dans ledit écran des canaux pour la circulation d'un fluide de refroidissement. Il en résulte une contrainte en ce qui concerne la disposition desdits orifices et buses. Cependant, on peut alléger cette contrainte en disposant dans des plans différents les canaux de circulation de fluide de refroidissement et les canaux d'alimentation en matière finement divisée.

Les orifices de passage des écoulements élémentaires de plasma peuvent présenter le même diamètre ou au contraire avoir des diamètres différents. L'interposition dudit écran peut avoir pour conséquence que les conditions de température et de pression du jet de plasma sont identiques en aval et en amont dudit écran, ou bien au contraire celui-ci peut être conçu pour introduire une différence dans ces conditions en amont et en aval dudit écran.

Les orifices de passage des écoulements élémentaires de plasma peuvent avoir toute forme désirée, telle que cylindrique ou conique, ou bien encore se présenter comme des tuyères avec convergent et divergent. On peut prévoir toute autre forme ayant pour effet de favoriser la répartition du jet de plasma. Les axes de ces orifices de passage des écoulements élémentaires de plasma peuvent être parallèles à l'axe du jet principal, ou au contraire être légèrement inclinés sur celui-ci, par exemple pour engendrer un effet de convergence vers ledit axe ou un effet de rotation hélicoïdal autour de lui.

De même, les buses d'injection du ou des réactifs peuvent être cylindriques, coniques ou présenter toute forme susceptible de favoriser le mélange de réactifs dans le jet de plasma. Elles peuvent être pourvues de dispositifs de pulvérisation aptes à améliorer la dispersion des réactifs.

Ainsi, selon l'invention, un appareil de réaction et/ou de traitement d'au moins une matière finement divisée dans un jet de plasma, comportant un générateur dudit jet de plasma et des moyens d'alimentation de ladite matière finement divisée, est remarquable en ce qu'il comporte un écran interposé transversalement sur le trajet dudit jet de plasma et pourvu de trous traversants formant des orifices de fractionnement dudit jet de plasma et d'au moins une buse entourée au moins partiellement par lesdits orifices, les axes desdits orifices et de la ou des buses présentant au moins la même direction générale et chaque buse étant alimentée en matière finement divisée à partir desdits moyens d'alimentation.

On remarquera que le document DE-C-856 712 décrit un dispositif pour permettre la réalisation d'un revêtement résistant sur des surfaces fusibles. Pour cela, à l'aide d'un écran, on projette un jet de matière de protection et plusieurs jets élémentaires d'un gaz chaud en direction de la surface à revêtir. Lors d'un déplacement relatif appliqué entre ledit dispositif et la surface à revêtir, les jets chauds élémentaires se trouvant du côté avant du déplacement relatif sont destinés à faire fondre superficiellement la surface, de sorte que la matière résistante est projetée sur une surface fondue, alors que les jets arrière sont destinés à fondre la matière résistante projetée.

Le document DE-C-856 712 ne concerne donc ni les plasmas, ni l'injection de réactifs dans un plasma; de plus, la matière résistante pulverisée n'est pas injectée dans un flux gazeux chaud, pour y être répartie de façon uniforme, mais est simplement accompagnée de jets gazeux chauds auxquels elle ne se mélange pas.

Enfin, on remarquera que l'écran du document DE-C-856 712 est disposé transversalement au jet de matière de protection, mais parallèlement au jet principal de gaz chaud, donnant naissance auxdits jets élémentaires. Cette disposition serait inadaptée à l'usage d'un jet de plasma.

Les figures du dessin annexé feront bien comprendre comment l'invention peut être réalisée. Sur ces figures, des références identiques désignent des éléments semblables.

Les figures 1 et 2 illustrent schématiquement le procédé et le dispositif conformes à l'invention.

La figure 3 est une vue de face d'un exemple de réalisation du dispositif d'injection selon l'invention.

Les figures 4, 5 et 6 sont respectivement des coupes selon les lignes IV - IV, V - V et VI - VI de la figure 3.

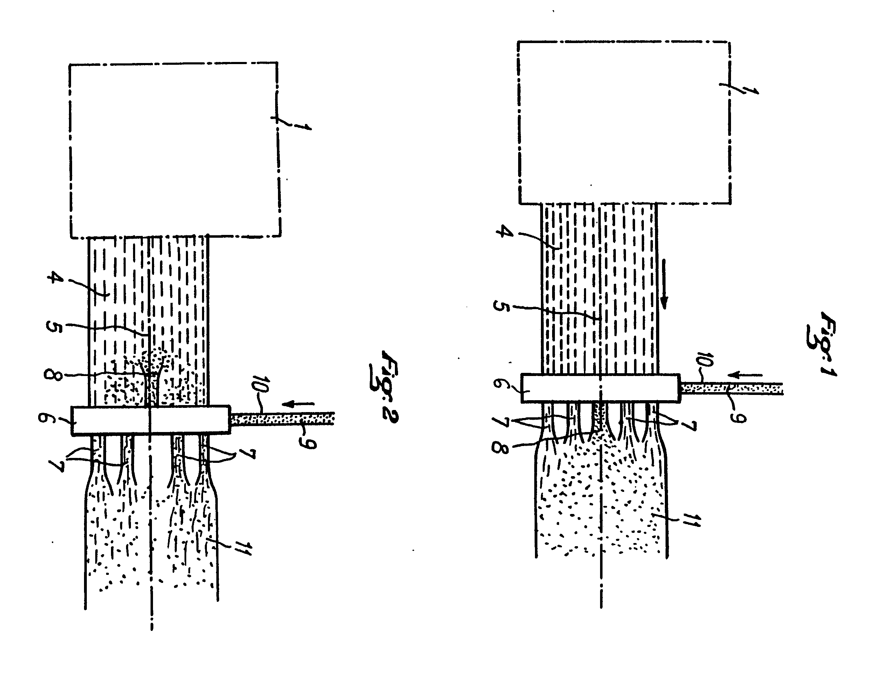

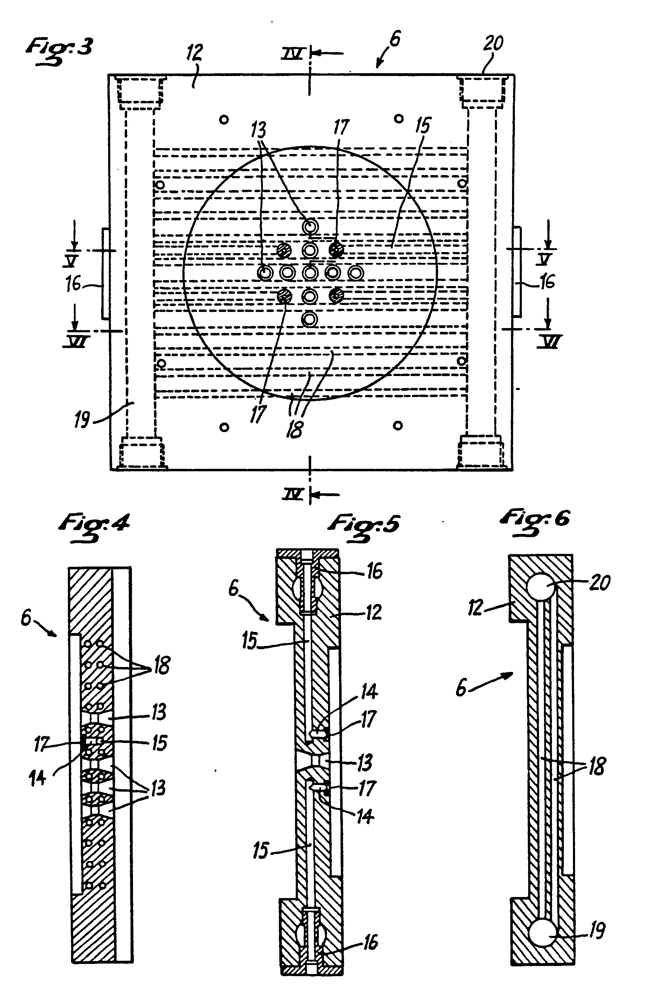

Le dispositif selon l'invention, représenté schématiquement sur les figures 1 et 2, comporte un générateur de plasma symbolisé par un rectangle 1 en traits mixtes et émettant un jet de plasma 4, d'axe 5. Sur le trajet du jet de plasma 4 est interposé un écran 6 susceptible de diviser celui-ci en une pluralité de jets élémentaires au moins sensiblement parallèles 7 et d'émettre un ou plusieurs jets 8, au moins sensiblement parallèles auxdits jets 7, d'une matière finement divisée 9, qui lui est adressée par des moyens d'amenée 10. Ainsi, en aval dudit écran 6, on obtient un jet homogène 11 résultant de la combinaison, de l'interaction et/ou de la réaction du jet de plasma 4 et de la matière finement divisée 9.

Dans le dispositif de la figure 1, le ou les jets 8 de matière finement divisée 9 sont dirigés dans le même sens que les jets élémentaires 7, c'est-à-dire vers le jet homogène résultant 11. En revanche, dans le dispositif de la figure 2, le ou les jets 8 de matière finement divisée sont dirigés en sens opposé aux jets élémentaires 7, c'est-à-dire vers le jet de plasma 4. Dans ce cas, la matière 9 provenant du jet 8 traverse l'écran 6 et est transporté vers l'aval par les jets élémentaires 7.

Les figures 3, 4, 5 et 6 montrent un mode de réalisation de l'écran 6. Celui-ci comporte une plaque 12, percée au voisinage de son centre d'une pluralité de trous traversants 13. Dans l'exemple représenté, chaque trou traversant 13 présente la forme d'une tuyère convergente-divergente et l'ensemble desdits trous 13 forme une croix à branches rectangulaires. Ces trous traversants 13 sont destinés à engendrer les jets élémentaires 7.

Par ailleurs, entre les trous traversants 13, l'écran 6 comporte des trous borgnes 14, reliés à des canaux 15, pratiqués dans l'épaisseur de plaque 12 et susceptibles d'être raccordés à une ou plusieurs amenées d'alimentation 10, par l'intermédiaire d'embouts 16. A l'intérieur des trous borgnes 14 sont éventuellement disposés des buses de pulvérisation 17. Ainsi, celles-ci peuvent émettre des jets 8 de matière finement divisée. A cet effet, celle-ci peut être véhiculée par un gaz porteur neutre ou participant à la réaction.

Enfin, dans la plaque 12 sont prévus des canaux 18, pour la circulation d'un fluide de refroidissement, ce fluide étant amené et évacué par des collecteurs 19 et 20.

Dans l'exemple représenté, les buses de pulvérisation 17 de la matière divisée 19 sont au nombre de quatre et sont disposées sur les bissectrices de la croix des trous traversants 13, à égales distances du centre de ladite croix.

Le mode de réalisation montrée par les figures 3 à 6 est particulièrement, quoique non exclusivement, approprié à réaliser le mélange d'une poudre, dont la granulométrie varie de quelques microns à 500 microns, à un jet de plasma dont les caractéristiques de temperature et de pression sont respectivement de l'ordre de 3500° C et de 5 bars. La plaque 12 peut alors être en cuivre et le fluide de refroidissement peut être de l'eau circulant à grande vitesse dans les canaux 18.

On remarquera que les canaux 15 d'alimentation en matière divisée débouchant individuellement à la périphérie de la plaque 12 (par les embouts 16), il est facile éventuellement d'injecter plusieurs matières divisées différentes; il suffit de relier des embouts 16 à des sources d'alimentation en matières différentes, de sorte que les buses projettent ces matières différentes dans le jet de plasma.

## Revendications

1. Procédé pour obtenir un jet homogène (11) à partir d'un jet de plasma (4) et d'un courant de matière (9) finement divisée, ladite matière finement divisée étant injectée dans ledit plasma et ledit jet homogène résultant de la combinaison, de l'interaction et/ou de la réaction dudit plasma et de ladite matière finement divisée, ledit procédé comprenant les étapes suivantes:
-   on interpose sur le trajet dudit jet de plasma (4) un écran (6) percé d'une pluralité d'orifices (13) spatialement répartis autour d'un axe (5) dudit jet de plasma, de façon à fractionner celui-ci en une pluralité d'écoulements élémentaires (7) de plasma présentant au moins approximativement la même direction générale; et
-   on amène ledit courant de matière (9) finement divisée à au moins une buse (17) au moins partiellement entourée par lesdits orifices (13), afin de créer au moins un courant (8) de matière finement divisée, de direction au moins approximativement semblable à celle desdits écoulements élémentaires (7) et entouré par au moins certains de ceux-ci.

2. Procédé selon la revendication 1, caractérisé en ce que ledit courant de matière (9) finement divisée est fractionné également en une pluralité de courants élémentaires (8), adressés à une pluralité de buses (17) respectives, chacune desdites buses étant au moins partiellement entourée par certains desdits orifices (13) de passage des écoulements élémentaires (7) de plasma.

3. Procédé selon l'une des revendications 1 ou 2, caractérisé en ce que l'on prévoit plusieurs buses destinées à recevoir des courants de matières finement divisées différentes, chacune desdites buses étant au moins partiellement entourée par certains desdits orifices de passage des écoulements élémentaires (7) de plasma.

4. Procédé selon l'une quelconque des revendications 1 à 3, caractérisé en ce que le ou les courants (8) de matières finement divisées sont injectés dans le même sens que celui des écoulements élémentaires (7) de plasma.

5. Procédé selon l'une quelconque des revendications 1 à 3,

caractérisé en ce que le ou les courants (8) de matière(s) finement divisée(s) sont injectés à contresens des écoulements élémentaires (7) de plasma.

6. Dispositif pour la mise en oeuvre du procédé spécifié sous l'une quelconque des revendications 1 à 5,

caractérisé en ce qu'il est constitué par un écran (6) en forme de plaque épaisse, destinée à être interposée sur le trajet dudit jet de plasma, transversalement à celui-ci, et pourvue de trous traversants (13) formant lesdits orifices de fractionnement dudit jet de plasma (4) et d'au moins une buse (17) entourée au moins partiellement par lesdits orifices, les axes desdits orifices et de la ou des buses présentant au moins la même direction générale et un canal d'alimentation (15) de chaque buse en matière finement divisée étant pratiqué dans l'épaisseur dudit écran (6) et débouchant, individuellement ou en commun avec d'autres canaux, à la périphérie dudit écran (6) pour pouvoir être relié à des moyens d'alimentation (10) en matière finement divisée.

7. Dispositif selon la revendication 6,

caractérisé en ce qu'il comporte un réseau de canaux de circulation (18) pour un fluide de refroidissement.

8. Appareil de réaction et/ou de traitement d'au moins une matière finement divisée (9) dans un jet de plasma (4) comportant un générateur (1) dudit jet de plasma et des moyens d'alimentation (10) de ladite matière finement divisée,

caractérisée en ce qu'il comporte un écran (6) interposé transversalement sur le trajet dudit jet de plasma (4) et pourvu de trous traversants (13) formant des orifices de fractionnement du jet de plasma et d'au moins une buse (17) entourée au moins partiellement par lesdits orifices, les axes desdits orifices et de la ou des buses présentant au moins la même direction générale et chaque buse étant alimentée en matière finement divisée à partir desdits moyens d'alimentation.

**Patentansprüche**

1. Verfahren zum Erzielen eines homogenen Strahls (11) aus einem Plasmastrahl (4) und einem Strom (9) aus feinverteilter Materie, wobei die feinverteilte Materie in das Plasma injiziert wird und der homogene Strahl aus der Kombination, der Wechselwirkung und/oder der Reaktion des Plasmas und der feinverteilten Materie entsteht, gekennzeichnet durch folgende Stufen:
- in die Bahn des Plasmastrahls (4) wird eine von einer Vielzahl von räumlich um eine Achse (5) des Plasmastrahls verteilten Öffnungen (13) durchbohrte Blende (6) gebracht, sodaß der Plasmastrahl in eine Vielzahl von Elementarströmungen (7) von Plasma aufgeteilt wird, die wenigstens näherungsweise die gleiche allgemeine Richtung haben; und
- der Strom (9) von feinverteilter Materie wird mindestens einer mindestens teilweise von den Öffnungen (13) umgebenen Düse (17) zugeführt, um mindestens einen Strom (8) feinverteilter Materie in einer mindestens näherungsweise ähnlichen Richtung zu der der Elementarströmungen (7) und mindestens teilweise von diesen umgeben zu erzeugen.

2. Verfahren nach Anspruch 1,

dadurch gekennzeichnet, daß der Strom (9) von feinverteilter Materie ebenso in eine Vielzahl von Elementarströmen (8) aufgeteilt wird, jeweils gerichtet auf eine Vielzahl von Düsen (17), wobei jede dieser Düsen mindestens teilweise von bestimmten der Durchgangsöffnungen (13) der Elementarströmungen (7) des Plasmas umgeben ist.

3. Verfahren nach einem der Ansprüche 1 oder 2,

dadurch gekennzeichnet, daß mehrere Düsen zur Aufnahme verschiedener Ströme feinverteilter Materie vorgesehen sind, wobei jede dieser Düsen mindestens teilweise von bestimmten der Durchgangsöffnungen für die Elementarströmungen (7) des Plasmas umgeben ist.

4. Verfahren nach einem der Ansprüche 1 bis 3,

dadurch gekennzeichnet, daß der Strom oder die Ströme (8) feinverteilter Materie in die Elementarströmungen (7) von Plasma in gleicher Richtung wie diese injiziert werden.

5. Verfahren nach einem der Ansprüche 1 bis 3,

dadurch gekennzeichnet, daß der Strom oder die Ströme (8) feinverteilter Materie in die Elementarströmungen (7) von Plasma in entgegengesetzter Richtung wie diese injiziert werden.

6. Vorrichtung zur Durchführung des in einem der Ansprüche 1 bis 5 angegebenen Verfahrens,

dadurch gekennzeichnet, daß sie aus einer Blende (6) in Form einer dicken Platte besteht, die in die Bahn des Plasmastrahls gebracht werden kann und die mit Aufteilungsöffnungen für den Plasmastrahl (4) bildenden Durchgangslöchern (13) sowie mit mindestens einer mindestens teilweise von den Öffnungen umgebenen Düse (17) versehen ist, wobei die Achsen der Öffnungen und der Düse oder Düsen mindestens die gleiche allgemeine Richtung aufweisen und wobei ein Versorgungskanal (15) für jede Düse für feinverteilte Materie in der Dicke der Blende (6) ausgeführt ist und sich einzeln oder gemeinsam mit anderen Kanälen zum Umfang der Blende (6) hin öffnet, um an Versorgungsmittel (10) für feinverteilte Materie angeschlossen werden zu können.

7. Vorrichtung nach Anspruch 6,

dadurch gekennzeichnet, daß sie ein Netz von Zirkulationskanälen (18) für eine Kühlflüssigkeit umfaßt.

8. Apparat zur Reaktion und/oder Verarbeitung mindestens einer feinverteilten Materie (9) in einem Plasmastrahl (4) mit einem Generator (1) für diesen Plasmastrahl und Versorgungsmitteln (10) für die feinverteilte Materie,

dadurch gekennzeichnet, daß er eine seitlich in die Bahn des Plasmastrahls (4) eingelegte Blende (6) umfaßt und mit Aufteilungsöffnungen für das Plasma bildenden Durchgangslöchern (13) sowie mit mindestens einer mindestens teilweise von den Öffnungen umgebenen Düse (17) versehen ist, wobei die Achsen der Öffnungen und der Düse oder der Düsen mindestens die gleiche allgemeine Richtung aufweisen und wobei jede Düse mit feinverteilter Materie aus den Versorgungsmitteln versorgt wird.

## Claims

1. Process for obtaining an homogeneous jet (11) from a plasma jet (4) and a stream of finely divided material (9), said finely divided material being injected into said plasma and said homogeneous jet resulting from the combination, interaction and/or reaction of said plasma and said finely divided material, said process comprising the steps of:
- interposing on the path of said plasma jet (4) a screen (6) pierced with a plurality of orifices (13) spatially distributed about an axis (5) of said plasma jet so as to fractionate the latter into a plurality of elementary flows (7) of plasma having at least approximately the same general direction; and
- leading said stream of finely divided material (9) to at least one nozzle (17) at least partially surrounded by said orifices (13), in order to create at least one stream (8) of finely divided material, whose direction is at least approximately similar to that of said elementary flows (7) and surrounded by at least certain of them.

2. Process according to claim 1, characterized in that said stream of finely divided material (9) is also fractionated into a plurality of elementary streams (8), sent to a plurality of respective nozzles (17), each of said nozzles being at least partially surrounded by certain of said orifices (13) for passage of the elementary plasma flows (7).

3. Process according to any of claims 1 or 2, characterized in that a plurality of nozzles are provided, adapted to receive streams of different finely divided materials, each of said nozzles being at least partially surrounded by certain of said orifices for passage of the elementary plasma flows (7).

4. Process according to any one of claims 1 to 3, characterized in that the stream or streams (8) of finely divided materials are injected in the same direction as that of the elementary plasma flows (7).

5. Process according to any one of claims 1 to 3, characterized in that the stream or streams (8) of finely divided materials are injected in counterflow with respect to the elementary plasma flows (7).

6. Device for carrying out the process according to any one of claims 1 to 5, characterized in that it is constituted by a thick plate-shaped screen (6) intended to be interposed on the path of said plasma jet, transversely thereof, and provided with through holes (13) forming said orifices for fractionating said plasma jet (4) and at least one nozzle (17) surrounded at least partially by said orifices, the axes of said orifices and said at least one nozzle having at least the same general direction and a channel (15) for supplying each nozzle with finely divided material being provided in the thickness of said screen (6) and issuing, individually or in common with other channels, at the periphery of said screen (6) to be connectable to finely divided material supplying means (10).

7. Device according to claim 6, characterized in that it comprises a network of channels (18) for circulation of a cooling fluid.

8. Apparatus for reaction and/or for treatment of at least one finely divided material (9) in a plasma jet (4), comprising a generator (1) of said plasma jet and means (10) for supplying said finely divided material, characterized in that it comprises a screen (6) interposed transversely on the path of said plasma jet (4) and provided with through holes (13) forming orifices for fractionating the plasma jet and with at least one nozzle (17) surrounded at least partially by said orifices, the axes of said orifices and of the or each nozzle being at least in the same general direction and each nozzle being supplied with finely divided material from said supply means.

*Fig. 1*

*Fig. 2*

1

Fig. 3

Fig. 4

Fig. 5

Fig. 6